(19) 

Europäisches Patentamt
European Patent Office
Office européen des brevets

(11) **EP 4 395 194 A1**

(12) **EUROPEAN PATENT APPLICATION**
published in accordance with Art. 153(4) EPC

(43) Date of publication:
 **03.07.2024 Bulletin 2024/27**

(21) Application number: **22833538.6**

(22) Date of filing: **27.06.2022**

(51) International Patent Classification (IPC):
 *H04B 7/06* (2006.01)  *H04B 7/0417* (2017.01)
 *H04B 17/318* (2015.01)  *H04B 17/345* (2015.01)
 *H04L 5/00* (2006.01)

(52) Cooperative Patent Classification (CPC):
 **H04B 7/0417; H04B 7/06; H04B 17/318;**
 **H04B 17/345; H04L 5/00**

(86) International application number:
 **PCT/KR2022/009128**

(87) International publication number:
 **WO 2023/277482 (05.01.2023 Gazette 2023/01)**

(84) Designated Contracting States:
 **AL AT BE BG CH CY CZ DE DK EE ES FI FR GB**
 **GR HR HU IE IS IT LI LT LU LV MC MK MT NL NO**
 **PL PT RO RS SE SI SK SM TR**
 Designated Extension States:
 **BA ME**
 Designated Validation States:
 **KH MA MD TN**

(30) Priority: **01.07.2021 KR 20210086206**

(71) Applicant: **LG Electronics Inc.**
 **Yeongdeungpo-gu**
 **Seoul 07336 (KR)**

(72) Inventors:
 • KIM, Kyuseok
  Seoul 06772 (KR)
 • PARK, Haewook
  Seoul 06772 (KR)
 • KANG, Jiwon
  Seoul 06772 (KR)
 • CHUNG, Jaehoon
  Seoul 06772 (KR)

(74) Representative: **Maikowski & Ninnemann**
 **Patentanwälte Partnerschaft mbB**
 **Postfach 15 09 20**
 **10671 Berlin (DE)**

(54) **METHOD AND DEVICE FOR TRANSMITTING AND RECEIVING CHANNEL STATE INFORMATION ON BASIS OF CODEBOOK IN WIRELESS COMMUNICATION SYSTEM**

(57)   A method and apparatus for transmitting and receiving codebook-based channel state information in a wireless communication system are disclosed. A method of performing CSI report by a UE in a wireless communication system according to an embodiment of the present disclosure may comprise: receiving, from a base station, configuration information on the channel state information report; receiving, from the base station, at least one channel state information-reference signal (CSI-RS) based on the configuration information; and transmitting, to the base station, CSI calculated based on the at least one CSI-RS and priority-related information for omission of the corresponding CSI. Here, the priority-related information may be determined based on strongest coefficient information related to the corresponding CSI.

FIG.7

START

Receive configuration information on CSI report — S710

Receive CSI-RS — S720

Transmit CSI — S730

END

EP 4 395 194 A1

**Description**

[Technical Field]

The present disclosure relates to a wireless communication system, and more particularly, to a method and apparatus for transmitting and receiving channel state information based on a codebook in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical object of the present disclosure is to provide a method and apparatus for transmitting and receiving channel state information based on a codebook.

An additional technical object of the present disclosure is to provide a method and device for transmitting and receiving priority-related information for reporting channel state information.

An additional technical object of the present disclosure is to provide a method and device for defining and/or determining priority-related information for reporting channel state information.

The technical objects to be achieved by the present disclosure are not limited to the above-described technical objects, and other technical objects which are not described herein will be clearly understood by those skilled in the pertinent art from the following description.

[Technical Solution]

A method of performing channel state information (CSI) report by a user equipment (UE) in a wireless communication system according to an aspect of the present disclosure may comprise: receiving, from a base station, configuration information on the channel state information report; receiving, from the base station, at least one channel state information-reference signal (CSI-RS) based on the configuration information; and transmitting, to the base station, CSI calculated based on the at least one CSI-RS and priority-related information for omission of the corresponding CSI. Here, the priority-related information may be determined based on strongest coefficient information related to the corresponding CSI.

A method of receiving channel state information (CSI) report by a base station in a wireless communication system according to an aspect of the present disclosure may comprise: transmitting, to a user equipment (UE), configuration information on the channel state information report; transmitting, to the UE, at least one channel state information-reference signal (CSI-RS) based on the configuration information; and receiving, from the UE, CSI calculated based on the at least one CSI-RS and priority-related information for omission of the corresponding CSI. Here, the priority-related information may be determined based on strongest coefficient information related to the corresponding CSI.

[Technical Effects]

According to the present disclosure, a method and apparatus for transmitting and receiving channel state information based on a codebook may be provided.

According to the present disclosure, a method and apparatus for transmitting and receiving priority-related information for reporting channel state information may be provided.

According to the present disclosure, a method and apparatus for defining and/or determining priority-related information for reporting channel state information may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a flowchart for explaining transmission of channel state information of a terminal according to an embodiment of the present disclosure.

FIG. 8 is a flowchart for explaining reception of channel state information by a base station according to an embodiment of the present disclosure.

FIG. 9 is a diagram for explaining a signaling process according to an embodiment of the present disclosure.

FIG. 10 is a diagram which illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network(5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power

OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

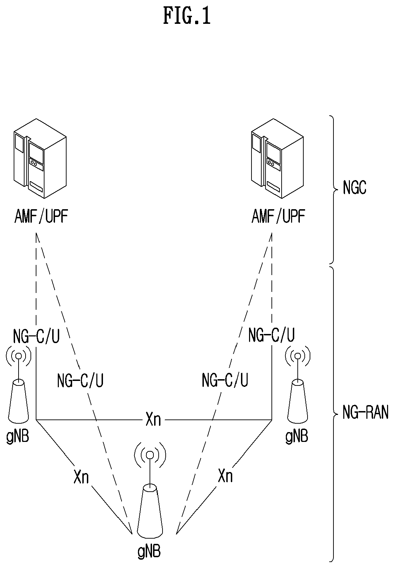

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

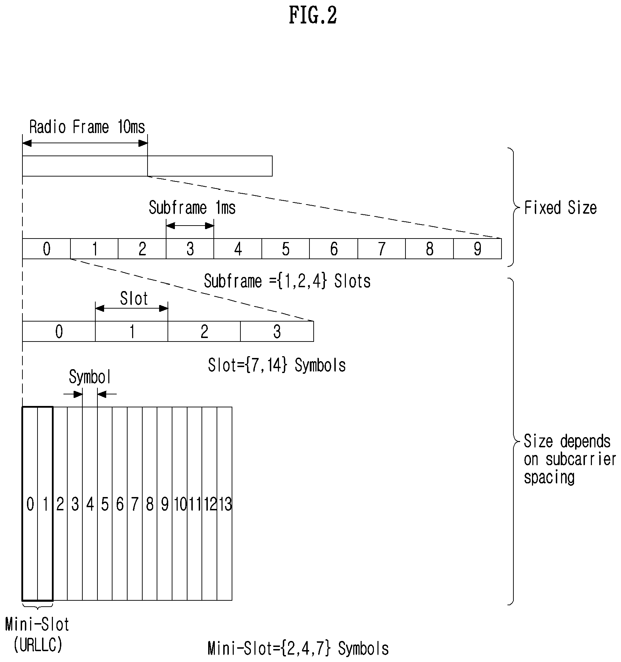

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW) .

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=10$ms. Here, a radio frame is configured with 10 subframes having a duration of $T_{sf}=(\Delta f_{max}N_f/1000)\cdot T_c=1$ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0,...,N_{slot}^{subframe,\mu}-1\}$ in a subframe and are numbered in an increasing order of $n_{s,f}^{\mu}\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

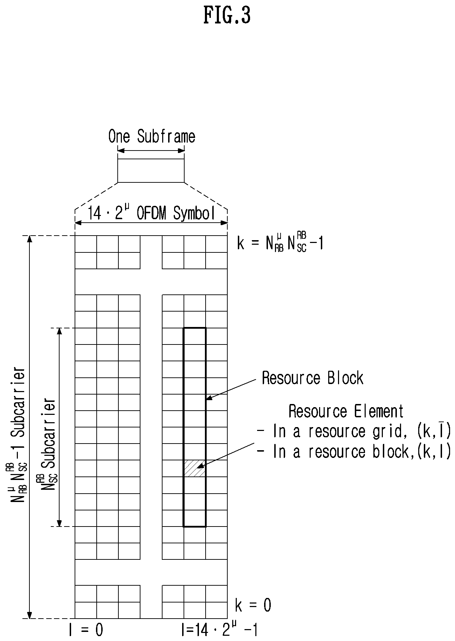

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \le N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

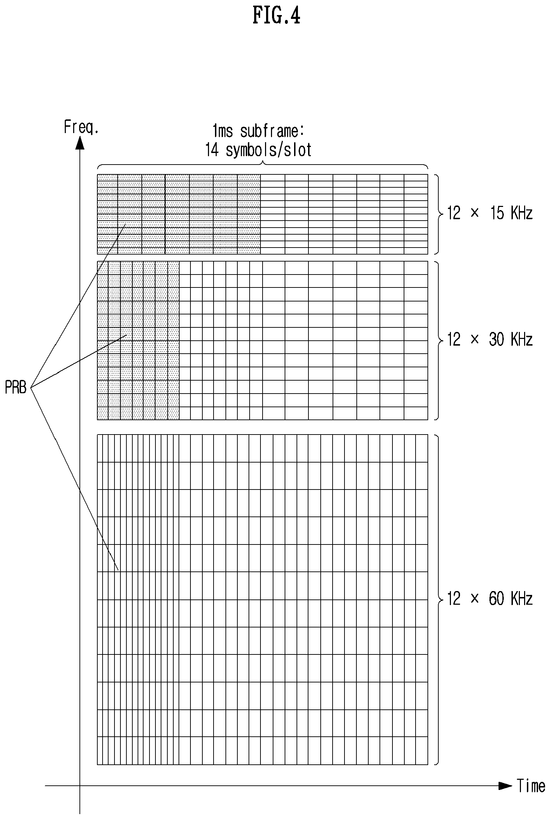

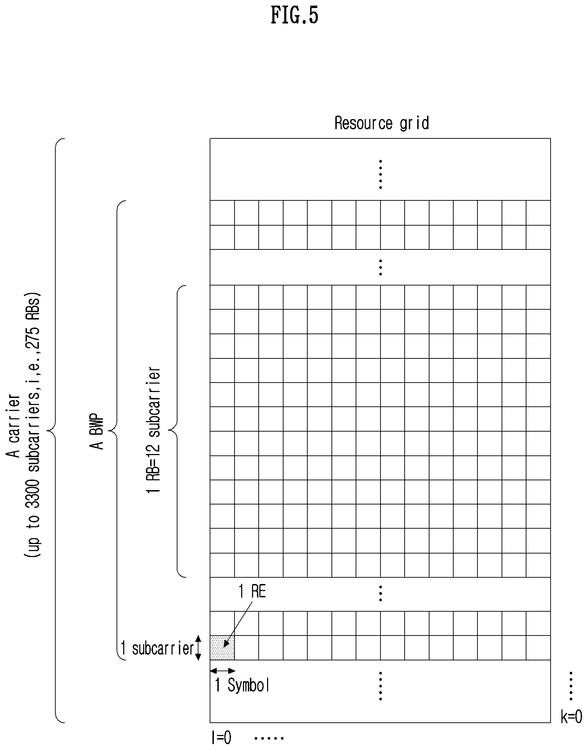

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC) . If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

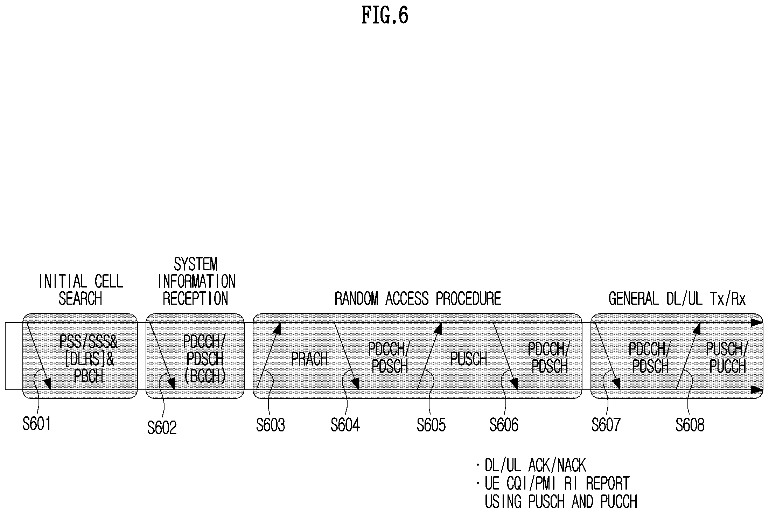

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

CSI-related Operation

In an NR (New Radio) system, a CSI-RS(channel state information-reference signal) is used for time and/or frequency tracking, CSI computation, L1(layer 1)-RSRP(reference signal received power) computation and mobility. Here, CSI computation is related to CSI acquisition and L1-RSRP computation is related to beam management (BM).

CSI(channel state information) collectively refers to information which may represent quality of a radio channel (or also referred to as a link) formed between a terminal and an antenna port.

- To perform one of the usages of a CSI-RS, a terminal (e.g., user equipment, UE) receives configuration information related to CSI from a base station (e.g., general Node B, gNB) through RRC(radio resource control) signaling.

The configuration information related to CSI may include at least one of information related to a CSI-IM (interference management) resource, information related to CSI measurement configuration, information related to CSI resource configuration, information related to a CSI-RS resource or information related to CSI report configuration.

i) Information related to a CSI-IM resource may include CSI-IM resource information, CSI-IM resource set information, etc. A CSI-IM resource set is identified by a CSI-IM resource set ID (identifier) and one resource set includes at least one CSI-IM resource. Each CSI-IM resource is identified by a CSI-IM resource ID.

ii) Information related to CSI resource configuration may be expressed as CSI-ResourceConfig IE. Information related to a CSI resource configuration defines a group which includes at least one of an NZP(non zero power) CSI-RS resource set, a CSI-IM resource set or a CSI-SSB resource set. In other words, the information related to a CSI resource configuration may include a CSI-RS resource set list and the CSI-RS resource set list may include at least one of a NZP CSI-RS resource set list, a CSI-IM resource set list or a CSI-SSB resource set list. A CSI-RS resource set is identified by a CSI-RS resource set ID and one resource set includes at least one CSI-RS resource. Each CSI-RS resource is identified by a CSI-RS resource ID.

Parameters representing a usage of a CSI-RS (e.g., a 'repetition' parameter related to BM, a 'trs-Info' parameter related to tracking) may be configured per NZP CSI-RS resource set.

iii) Information related to a CSI report configuration includes a report configuration type (reportConfigType) parameter representing a time domain behavior and a report quantity (reportQuantity) parameter representing CSI-related quantity for a report. The time domain behavior may be periodic, aperiodic or semi-persistent.

- A terminal measures CSI based on the configuration information related to CSI.

The CSI measurement may include (1) a process in which a terminal receives a CSI-RS and (2) a process in which CSI is computed through a received CSI-RS and detailed description thereon is described after.

For a CSI-RS, RE(resource element) mapping of a CSI-RS resource in a time and frequency domain is configured by higher layer parameter CSI-RS-ResourceMapping.

- A terminal reports the measured CSI to a base station.

In this case, when quantity of CSI-ReportConfig is configured as 'none (or No report)', the terminal may omit the report. But, although the quantity is configured as 'none (or No report)', the terminal may perform a report to a base station. When the quantity is configured as 'none', an aperiodic TRS is triggered or repetition is configured. In this case, only when repetition is configured as 'ON', a report of the terminal may be omitted.

CSI Measurement

An NR system supports more flexible and dynamic CSI measurement and reporting. Here, the CSI measurement may include a procedure of receiving a CSI-RS and acquiring CSI by computing a received CSI-RS.

As a time domain behavior of CSI measurement and reporting, aperiodic/semi-persistent/periodic CM (channel measurement) and IM (interference measurement) are supported. 4-port NZP CSI-RS RE pattern is used for CSI-IM configuration.

CSI-IM based IMR of NR has a design similar to CSI-IM of LTE and is configured independently from ZP CSI-RS resources for PDSCH rate matching. In addition, each port emulates an interference layer having (a desirable channel and) a precoded NZP CSI-RS in NZP CSI-RS-based IMR. As it is about intra-cell interference measurement for a multi-user case, MU interference is mainly targeted.

A base station transmits a precoded NZP CSI-RS to a terminal in each port of configured NZP CSI-RS based IMR.

A terminal assumes a channel/interference layer and measures interference for each port in a resource set.

When there is no PMI and RI feedback for a channel, a plurality of resources are configured in a set and a base station or a network indicates a subset of NZP CSI-RS resources through DCI for channel/interference measurement.

A resource setting and a resource setting configuration are described in more detail.

Resource Setting

Each CSI resource setting 'CSI-ResourceConfig' includes a configuration for a S≥1 CSI resource set (given by a higher layer parameter csi-RS-ResourceSetList). A CSI resource setting corresponds to CSI-RS- resourcesetlist. Here, S represents the number of configured CSI-RS resource sets. Here, a configuration for a S≥1 CSI resource set includes each CSI resource set including CSI-RS resources (configured with a NZP CSI-RS or CSI-IM) and a SS/PBCH block (SSB) resource used for L1-RSRP computation.

Each CSI resource setting is positioned at a DL BWP(bandwidth part) identified by a higher layer parameter bwp-id. In addition, all CSI resource settings linked to a CSI reporting setting have the same DL BWP.

A time domain behavior of a CSI-RS resource in a CSI resource setting included in a CSI-ResourceConfig IE may be indicated by a higher layer parameter resourceType and may be configured to be aperiodic, periodic or semi-persistent. For a periodic and semi-persistent CSI resource setting, the number (S) of configured CSI-RS resource sets is limited to '1'. For a periodic and semi-persistent CSI resource setting, configured periodicity and a slot offset are given by a numerology of an associated DL BWP as given by bwp-id.

When UE is configured with a plurality of CSI-ResourceConfigs including the same NZP CSI-RS resource ID, the same time domain behavior is configured for CSI-ResourceConfig.

When UE is configured with a plurality of CSI-ResourceConfigs including the same CSI-IM resource ID, the same time domain behavior is configured for CSI-ResourceConfig.

One or more CSI resource settings for channel measurement (CM) and interference measurement (IM) are configured through higher layer signaling as follows.

- CSI-IM resource for interference measurement
- NZP CSI-RS resource for interference measurement
- NZP CSI-RS resource for channel measurement

In other words, a CMR (channel measurement resource) may be a NZP CSI-RS for CSI acquisition and an IMR(Interference measurement resource) may be a NZP CSI-RS for CSI-IM and IM.

In this case, CSI-IM(or a ZP CSI-RS for IM) is mainly used for inter-cell interference measurement.

In addition, an NZP CSI-RS for IM is mainly used for intra-cell interference measurement from multi-users.

UE may assume that CSI-RS resource(s) for channel measurement and CSI-IM / NZP CSI-RS resource(s) for interference measurement configured for one CSI reporting are 'QCL-TypeD' per resource.

Resource Setting Configuration

As described, a resource setting may mean a resource set list.

For aperiodic CSI, each trigger state configured by using a higher layer parameter CSI-AperiodicTriggerState is associated with one or a plurality of CSI-ReportConfigs that each CSI-ReportConfig is linked to a periodic, semi-persistent or aperiodic resource setting.

One reporting setting may be connected to up to 3 resource settings.

- When one resource setting is configured, a resource setting (given by a higher layer parameter resourcesForChannelMeasurement) is about channel measurement for L1-RSRP computation.
- When two resource settings are configured, a first resource setting (given by a higher layer parameter resourcesForChannelMeasurement) is for channel measurement and a second resource setting (given by csi-IM-ResourcesForInterference or nzp-CSI-RS - ResourcesForInterference) is for interference measurement performed in CSI-IM or a NZP CSI-RS.
- When three resource settings are configured, a first resource setting (given by resourcesForChannelMeasurement) is for channel measurement, a second resource setting (given by csi-IM-ResourcesForInterference) is for CSI-IM based interference measurement and a third resource setting (given by nzp-CSI-RS-ResourcesForInterference) is for NZP CSI-RS based interference measurement.

For semi-persistent or periodic CSI, each CSI-ReportConfig is linked to a periodic or semi-persistent resource setting.

- When one resource setting (given by resourcesForChannelMeasurement) is configured, the resource setting is about channel measurement for L1-RSRP computation.
- When two resource settings are configured, a first resource setting (given by resourcesForChannelMeasurement) is for channel measurement and a second resourece setting (given by a higher layer parameter csi-IM-Resources-

ForInterference) is used for interference measurement performed in CSI-IM.

CSI Computation

When interference measurement is performed in CSI-IM, each CSI-RS resource for channel measurement is associated with a CSI-IM resource per resource in an order of CSI-RS resources and CSI-IM resources in a corresponding resource set. The number of CSI-RS resources for channel measurement is the same as the number of CSI-IM resources.

In addition, when interference measurement is performed in an NZP CSI-RS, UE does not expect to be configured with one or more NZP CSI-RS resources in an associated resource set in a resource setting for channel measurement.

A terminal configured with a higher layer parameter nzp-CSI-RS-ResourcesForInterference does not expect that 18 or more NZP CSI-RS ports will be configured in a NZP CSI-RS resource set.

For CSI measurement, a terminal assumes the followings.

- Each NZP CSI-RS port configured for interference measurement corresponds to an interference transmission layer.
- All interference transmission layers of an NZP CSI-RS port for interference measurement consider EPRE (energy per resource element) ratio.
- A different interference signal in RE(s) of an NZP CSI-RS resource for channel measurement, an NZP CSI-RS resource for interference measurement or a CSI-IM resource for interference measurement

CSI Report

For a CSI report, a time and frequency resource which may be used by UE are controlled by a base station.

CSI(channel state information) may include at least one of a channel quality indicator(CQI), a precoding matrix indicator(PMI), a CSI-RS resource indicator (CRI), a SS/PBCH block resource indicator (SSBRI), a layer indicator (LI), a rank indicator (RI) or L1-RSRP.

For CQI, PMI, CRI, SSBRI, LI, RI, L1-RSRP, a terminal is configured by a higher layer with $N \geq 1$ CSI-ReportConfig reporting setting, $M \geq 1$ CSI-ResourceConfig resource setting and a list of one or two trigger states (provided by aperiodicTriggerStateList and semiPersistentOnPUSCH-TriggerStateList). Each trigger state in the aperiodicTriggerStateList includes a associated CSI-ReportConfigs list which indicates a channel and optional resource set IDs for interference. In semiPersistentOnPUSCH-TriggerStateList, one associated CSI-ReportConfig is included in each trigger state.

In addition, a time domain behavior of CSI reporting supports periodic, semi-persistent, aperiodic.

i) Periodic CSI reporting is performed in a short PUCCH, a long PUCCH. Periodicity and a slot offset of periodic CSI reporting may be configured by RRC and refers to a CSI-ReportConfig IE.

ii) SP(semi-periodic) CSI reporting is performed in a short PUCCH, a long PUCCH, or a PUSCH.

For SP CSI in a short/long PUCCH, periodicity and a slot offset are configured by RRC and a CSI report is activated/deactivated by separate MAC CE / DCI.

For SP CSI in a PUSCH, periodicity of SP CSI reporting is configured by RRC, but a slot offset is not configured by RRC and SP CSI reporting is activated/deactivated by DCI(format 0_1). For SP CSI reporting in a PUSCH, a separated RNTI(SP-CSI C-RNTI) is used.

An initial CSI report timing follows a PUSCH time domain allocation value indicated by DCI and a subsequent CSI report timing follows a periodicity configured by RRC.

DCI format 0_1 may include a CSI request field and activate/deactivate a specific configured SP-CSI trigger state. SP CSI reporting has activation/deactivation equal or similar to a mechanism having data transmission in a SPS PUSCH.

iii) Aperiodic CSI reporting is performed in a PUSCH and is triggered by DCI. In this case, information related to trigger of aperiodic CSI reporting may be delivered/indicated/configured through MAC-CE.

For AP CSI having an AP CSI-RS, AP CSI-RS timing is configured by RRC and timing for AP CSI reporting is dynamically controlled by DCI.

In NR, a method of dividing and reporting CSI in a plurality of reporting instances applied to a PUCCH based CSI report in LTE (e.g., transmitted in an order of RI, WB PMI/CQI, SB PMI/CQI) is not applied. Instead, in NR, there is a limit that a specific CSI report is not configured in a short/long PUCCH and a CSI omission rule is defined. In addition, regarding AP CSI reporting timing, a PUSCH symbol/slot location is dynamically indicated by DCI. In addition, candidate slot offsets are configured by RRC. For CSI reporting, a slot offset(Y) is configured per reporting setting. For UL-SCH, a slot offset K2 is separately configured.

2 CSI latency classes (low latency class, high latency class) are defined with regard to CSI computation complexity. Low latency CSI is WB CSI which includes up to 4 ports Type-I codebooks or up to 4 ports non-PMI feedback CSI. High latency CSI refers to CSI other than low latency CSI. For a normal terminal, (Z, Z') is defined in a unit of OFDM symbols. Here, Z represents the minimum CSI processing time until a CSI report is performed after receiving aperiodic CSI triggering DCI. In addition, Z' refers to the minimum CSI processing time until a CSI report is performed after receiving a CSI-RS for a channel/interference.

Additionally, a terminal reports the number of CSI which may be calculated at the same time.

CSI configuration and CSI omission

A CSI report includes two parts. CSI report includes Part-1 CSI Feedback and Part-2 CSI Feedback.

Part-1 CSI feedback has a fixed payload size and is used to identify the number of information bits of Part-2 CSI feedback. Part-1 CSI feedback must be transmitted completely before the corresponding Part-2 CSI feedback.

For Type I CSI feedback, Part-1 CSI feedback includes a rank indicator (RI) (if reported), a CSI-RS resource indicator (CRI) (if reported), a channel quality indicator (CQI) for the first codeword (if reported). Part-2 CSI feedback includes a precoding matrix indicator (PMI) (if reported) and a CQI for the second codeword (if reported) if RI (if reported) is greater than 4.

For Type II CSI feedback, Part-1 CSI feedback includes RI (if reported), CQI, and information indicating the number of non-zero wideband amplitude coefficients per layer for Type II CSI. Contains information. The fields of Part-1 CSI feedback are encoded individually. Part-2 CSI feedback includes PMI of Type II CSI. Part-1 CSI feedback and Part-2 CSI feedback are encoded separately.

For enhanced Type II CSI feedback, Part-1 CSI feedback includes RI (if reported), CQI, and information indicating the total number of non-zero wideband amplitude coefficients across layers for enhanced Type II CSI. The fields of Part-1 CSI feedback are encoded individually. Part-2 CSI feedback includes the PMI of the enhanced Type II CSI. Part-1 CSI feedback and Part-2 CSI feedback are encoded separately.

As a specific example, PMI for enhanced Type II CSI feedback is shown in Table 6 below. For enhanced Type II CSI feedback, it may include enhanced Type II codebook (CB) and enhanced Type II port selection codebook (PSCB).

[Table 6]

| Codebook Type | PMI |
| --- | --- |
| Enhanced Type II CB | Information fields $X_1$:<br>$i_{1,1}$, $i_{1,2}$, $i_{1,8,1}$, $i_{1,8,3}$, $i_{1,8,4}$, |
| | Information fields $X_2$:<br>$i_{2,3,1}$, $i_{2,3,2}$, $i_{2,3,3}$, $i_{2,3,4}$, $i_{1,5}$, $i_{1,6,1}$, $i_{1,6,2}$, $i_{1,6,3}$, $i_{1,6,4}$, $\{i_{2,4,l}\}_{l=1, ..., v}$, $\{i_{2,5,l}\}_{l=1, ..., v}$, $\{i_{1,7,l}\}_{l=1, ..., v}$ |
| Enhanced Type II PSCB | Information fields $X_1$:<br>$i_{1,1}$, $i_{1,8,1}$, $i_{1,8,2}$, $i_{1,8,3}$, $i_{1,8,4}$, |
| | Information fields $X_2$:<br>$i_{2,3,1}$, $i_{2,3,2}$, $i_{2,3,3}$, $i_{2,3,4}$, $i_{1,5}$, $i_{1,6,1}$, $i_{1,6,2}$, $i_{1,6,3}$, $i_{1,6,4}$, $\{i_{2,4,l}\}_{l=1, ..., v}$, $\{i_{2,5,l}\}_{l=1, ..., v}$, $\{i_{1,7,l}\}_{l=1, ..., v}$ |

Referring to Table 6, l represents a layer and $i_{1,1}$ represents port selection. $i_{1,8,layer}$ represents the report value for the strongest coefficient. The terminal reports the strongest index for the port(s) which is selected after port selection. In this case, it is assumed that the FD basis (e.g., basis vector in the frequency domain) is aligned through remapping (i.e., FD basis 0 corresponds to the strongest coefficient).

$i_{2,3,layer}$ represents the amplitude coefficient indicator for each polarization. The pole containing the strongest coefficient is assumed to be 1, and the terminal does not report this.

$i_{1,5}$ and $i_{1,6,layer}$ represent reporting on FD basis (s) . For example, the terminal may report $M_v$ FD basis out of N3 (e.g., number of subbands) or $M_v$ out of $2M_v$ FD basis. $i_{2,4,layer}$ represents the amplitude coefficient indicator for each SD basis and FD basis, and $i_{2,5,layer}$ represents the phase coefficient indicator for each SD basis and FD basis. $i_{1,7,layer}$ is related to information indicating the combination with the actual non-zero coefficient among the possible combinations after port selection and FD basis selection based on a bitmap. For example, $i_{2,4,layer}$ and $i_{2,5,layer}$ indicate coefficients for the combination indicated by $i_{1,7,layer}$.

In relation to the enhanced type II CSI feedback described above, CSI omission is performed according to priority as shown in Equation 3 below.

【Equation 3】

$$\mathrm{Pri}(l,i,f) = 2 \cdot L \cdot v \cdot \pi(f) + v \cdot i + l$$

$$\mathrm{wherein,}\ \pi(f) = \min(2 \cdot n_{3,1}{}^{(f)}, 2 \cdot (N_3 - n_{3,1}{}^{(f)}) - 1)$$

$$\mathrm{with}\ l = 1, 2, \ldots, v,\ i = 0, 1, 2, \ldots, 2L-1,\ \mathrm{and}\ f = 0, 1, \ldots,$$

$$M_v - 1$$

Referring to Equation 3, l represents a layer, i represents an index related to the spatial domain (SD), and f represents an index related to the frequency domain (FD). In CSI reporting, the indices $i_{2,4,layer}$, $i_{2,5,layer}$, and $i_{1,7,layer}$ of each reported component are associated with a priority value based on Equation 3. Here, the highest priority component has the lowest Pri(l,i,f) value.

Omission for Part-2 CSI feedback is configured to follow the priority as shown in Table 7 below. The priority is set in the following order: group 0 > group 1 > group 2. That is, group 0 has the highest priority, and group 2 has the lowest priority.

[Table 7]

| Group number | Index |
|---|---|
| Group 0 | $i_{1,1}$, $i_{1,2}$, $i_{1,8,l}$ (l = 1, ..., v) |
| Group 1 | $i_{1,5}$ (if reported), $i_{1,6,l}$ (if reported), the v2L$M_v$-floor($K^{NZ}/2$) highest priority elements of $i_{1,7,l}$, $i_{2,3,l}$, the ceil($K^{NZ}/2$)-v highest priority elements of $i_{2,4,l}$ and the ceil ($K^{NZ}/2$) -v highest priority elements of $i_{2,5,l}$ (l = 1, ..., v) |
| Group 2 | the floor ($K^{NZ}/2$) lowest priority elements of $i_{1,7,l}$, $i_{2,3,l}$, the floor($K^{NZ}/2$) lowest priority elements of $i_{2,4,l}$ and the floor($K^{NZ}/2$) lowest priority elements of $i_{2,5,l}$ (l = 1, ..., v) |

Referring to Table 7, while the existing Part-2 subband CSI is divided according to even/odd bands, in the enhanced Type II Codebook (CB) and the improved Type II Port Selection Codebook (PSCB), Part-2 CSI feedback information (e.g., PMI) is classified based on priority according to Equation 3 described above. In this case, the components that constitute PMI may be roughly divided into half based on the FD basis.

That is, according to the priority rule as in Equation 3, group 1 and group 2 are defined for $\{i_{2,4,l}\}_{l=1,\ldots,v}$, $\{i_{2,5,l}\}_{l=1,\ldots,v}$, and $\{i_{1,7,l}\}_{l=1,\ldots,v}$ related to Part-2 CSI feedback. In other words, according to the priority rule as in Equation 3, based on the FD basis (e.g., frequency domain-related basis vector, etc.), the coefficients ($\{i_{2,4,l}\}_{l=1,\ldots,v}$, $\{i_{2,5,l}\}_{l=1,\ldots,v}$, $\{i_{1,7,l}\}_{l=1,\ldots,v}$) may be roughly devided in half and defined as group 1 and group 2.

Table 8 shows an example of priority reporting levels related to omission of Part-2 CSI described above.

[Table 8]

| |
|---|
| Priority 0:<br>For CSI reports 1 to $N_{Rep}$, Group 0 CSI for CSI reports configured as 'typeII-r16' or 'typeII-PortSelection-r16' ; Part 2 wideband CSI for CSI reports configured otherwise |
| Priority 1:<br>Group 1 CSI for CSI report 1, if configured as 'typeII-r16' or 'typeII-PortSelection-r16'; Part 2 subband CSI of even subbands for CSI report 1, if configured otherwise |
| Priority 2:<br>Group 2 CSI for CSI report 1, if configured as 'typeII-r16' or 'typeII-PortSelection-r16'; Part 2 subband CSI of odd subbands for CSI report 1, if configured otherwise |

(continued)

| |
|---|
| Priority 3:<br>Group 1 CSI for CSI report 2, if configured as 'typeII-r16' or 'typeII-PortSelection-r16'; Part 2 subband CSI of even subbands for CSI report 2, if configured otherwise |
| Priority 4:<br>Group 2 CSI for CSI report 2, if configured as 'typeII-r16' or 'typeII-PortSelection-r16'; Part 2 subband CSI of odd subbands for CSI report 2, if configured otherwise |
| ... |
| Priority $2N_{Rep}$-1:<br>Group 1 CSI for CSI report $N_{Rep}$, if configured as 'typeII-r16' or 'typeII-PortSelection-r16'; Part 2 subband CSI of even subbands for CSI report $N_{Rep}$, if configured otherwise |
| Priority $2N_{Rep}$:<br>Group 2 CSI for CSI report $N_{Rep}$, if configured as 'typeII-r16' or 'typeII-PortSelection-r16'; Part 2 subband CSI of odd subbands for CSI report $N_{Rep}$, if configured otherwise |

Configuring and/or defining configuration and omission of channel state information

Hereisnafter, various examples of the present disclosure for transmitting and receiving CSI by configuring and/or defining the configuration of channel state information (CSI) and omission of the corresponding CSI will be described.

Unlike the existing enhanced type II codebook (CB)/port selection codebook (PSCB), further enhanced type II CB/PSCB is considered based on reciprocity between downlink and uplink.

Hereinafter, for convenience of explanation, enhanced Type II CB/PSCB (e.g., Type II CB/PSCB considered in 3GPP Rel-16) is referred to as 'eType II CB/PSCB', and further enhanced Type II CB/PSCB considered in the methods proposed in the present disclosure (e.g., Type II CB/PSCB considered in 3GPP Rel-17) is referred to as 'feType II CB/PSCB'.

With respect to eType II CB/PSCB and feType II CB/PSCB for CSI reporting, the terminal may select M basis in the frequency domain (e.g., FD basis) (for each layer or rank) to configure uplink control information (UCI) to be transmitted through the corresponding CSI, and select P basis in the spatial domain (e.g., SD basis).

As such, with regard to the CSI configuration and omission of CSI described in the present disclosure, a basis in the spatial domain (e.g., SD basis) and a basis in the frequency domain (e.g., FD basis) may be considered.

For example, the basis in the spatial domain may mean a basis vector in the spatial domain related to the codebook configuration, and may be expressed as basis information related to the spatial domain, basis vector related to the spatial domain, etc. A basis in a spatial domain may be a unit and/or entity related to compression in a spatial domain. As an example, the basis in the spatial domain may be information corresponding to a specific CSI-RS port.

For example, a basis in the frequency domain may mean a basis vector in the frequency domain related to codebook construction, and may be expressed as frequency domain-related basis information, frequency-domain-related basis vector (e.g., size-N3 X 1 orthogonal DFT vector), etc. A basis in the frequency domain may be a unit and/or entity related to compression in the frequency domain.

Hereinafter, for convenience of explanation, matters regarding the basis in the spatial domain related to codebook construction are referred to as SD basis information, and matters regarding the FD basis are referred to as FD basis information.

Compared to eType II CB/PSCB, in the case of feType II CB/PSCB, the number of basis in the frequency domain selected by the terminal (i.e., the above-mentioned M) may configured/indicated with a small value (e.g., 1 or 2). In addition, the number of ports that may be selected through port selection may be configured/indicated with a larger value (e.g., L=16 per polarization) compared to the case of eType II CB/PSCB (e.g., L=6 per polarization).

Therefore, in relation to eType II CB/PSCB, a priority rule which is defined so that two groups (e.g., group 1, group 2) may be distinguished according to the FD basis information (e.g., Equation 3 described above) may be changed or newly defined for feType II CB/PSCB.

The present disclosure proposes methods for configuring/defining CSI configuration (e.g., Part-1 and Part-2 CSI) for feType II CB/PSCB and CSI omission within the CSI configuration.

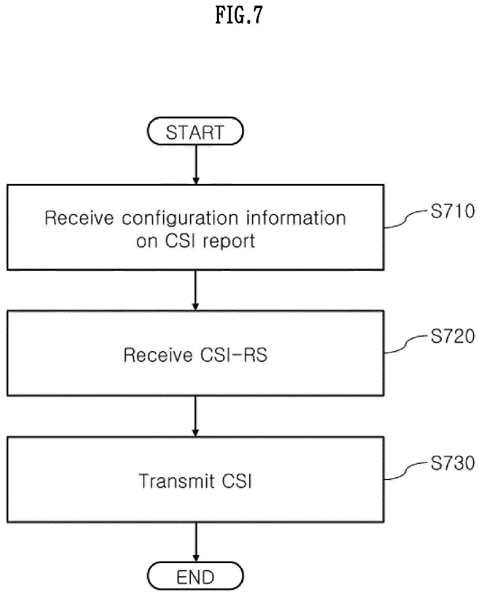

FIG. 7 is a flowchart for explaining transmission of channel state information of a terminal according to an embodiment of the present disclosure.

In step S710, the terminal may receive configuration information on CSI reporting from the base station.

For example, the configuration information on CSI reporting may include a configuration for CSI reporting (e.g., CSI reportConfig), a resource configuration related to CSI reporting (e.g., CSI resource configuration), and/or a CSI-RS related configuration for CSI reporting (e.g., CSI-RS resource configuration), etc. The corresponding configuration information may be transferred through higher layer signaling (e.g., RRC/MAC-CE based signaling).

In step S720, the terminal may receive at least one CSI-RS from the base station.

For example, at least one CSI-RS may be based on the configuration information in step S710 and may be received from resources pre-configured/defined between the base station and the terminal. At least one CSI-RS may be configured with one or more of resources for channel state measurement (e.g., CMR) or resources for interference measurement (e.g., IMR).

In step S730, the terminal may transmit CSI to the base station. For example, the corresponding CSI may be calculated/measured/configured based on at least one CSI-RS in step S720. Here, the corresponding CSI may be based on feType II CB/PSCB.

Although not shown in FIG. 7, in step S730, the terminal may also transmit priority-related information for omission of the corresponding CSI.

For example, priority-related information may be determined based on the strongest coefficient information associated/related with the corresponding CSI. As a detailed example, priority-related information may include at least one of SD basis information or FD basis information corresponding to the strongest coefficient information. Here, the SD basis information may be information on a specific CSI-RS port among one or more CSI-RS ports based on port selection related to the CSI. Additionally, the FD basis information may be information on a specific FD basis vector among one or more FD basis vectors selected in relation to the corresponding CSI.

Additionally, the corresponding CSI may be based on one or more information groups for uplink control information, and priority between one or more information groups may be determined based on priority-related information. For example, the information group corresponding to the strongest coefficient information described above may be configured/set to have the highest priority among the one or more information groups. Here, each of the one or more information groups may be configured to include at least one report value (e.g., amplitude coefficient information, phase coefficient information, non-zero coefficient indication information, etc.) corresponding to a combination of SD basis information and FD basis information. Additionally, for example, based on that the corresponding CSI is for wideband, the value for the precoding matrix indicator (PMI) may be included in the first information group among the one or more information groups.

Additionally, although not shown in FIG. 7, with respect to step S730, the terminal may transmit information on the number of CSI-RS ports determined based on the size of the uplink control information payload (UCI payload) for the corresponding CSI. In this case, the corresponding CSI may be determined based on the number of CSI-RS ports, and information on the number of corresponding CSI-RS ports may be included in the first CSI part (e.g., part-1 CSI) of the corresponding CSI configuration and transmitted.

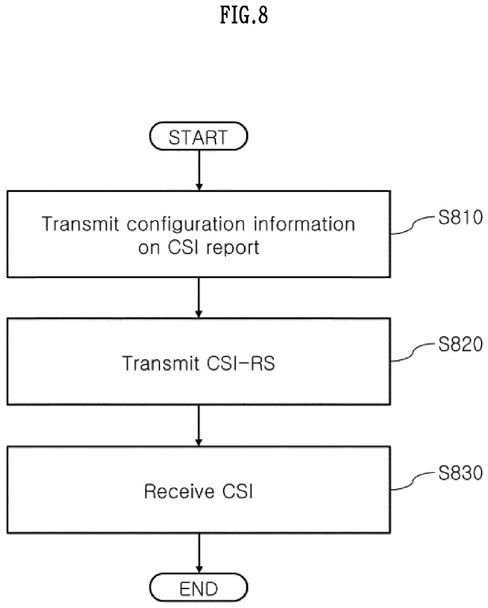

FIG. 8 is a flowchart for explaining reception of channel state information by a base station according to an embodiment of the present disclosure.

In step S810, the base station may transmit configuration information for CSI reporting to the terminal.

In step S820, the base station may transmit at least one CSI-RS to the terminal.

In step S830, the base station may receive CSI from the terminal.

Detailed examples of steps S810 to S830 are the same as steps S710 to S930 of FIG. 7, so overlapping descriptions are omitted.

Hereinafter, various examples of configuring and/or defining a configuration of CSI transmitted and received between the base station and the terminal for channel state reporting and priority related to an omission of the corresponding CSI will be described.

In the following embodiments, the FD basis information and/or the SD basis information may mean M (M>=1) FD basis information selected by the terminal (e.g., FD basis) and/or P (P>=1) SD basis information selected by the terminal (e.g., SD basis, CSI-RS port).

Additionally, in the following embodiments, Layer 1 (L1) signaling may mean (DCI-based) dynamic signaling between the base station and the terminal, and Layer 2 (L2) signaling may mean (RRC/MAC-CE based) higher layer signaling between the base station and the terminal.

Embodiment 1

This embodiment relates to a method of reporting information related to reporting priority for FD basis information and/or SD basis information to the base station, when the terminal reports CSI to the base station.

The terminal may configure uplink control information (UCI) for CSI based on the priority and may omit transmission of low-priority UCI based on the priority and available UCI payload size.

Here, the reporting priority may mean a report value defined to classify report values corresponding to the combination of FD basis information and SD basis information selected in the terminal into different groups (e.g., UCI group). As an example, the report value corresponding to the combination of FD basis information and SD basis information selected by the terminal may include amplitude and/or phase coefficients, non-zero coefficient indicators, etc.

For example, the reporting priority may be defined as a priority per FD basis information and/or a priority per SD basis information. Here, the priority is a value defined to classify reporting information (i.e., reporting coefficient(s)) into different groups, so it may also be referred to as a UCI group identifier (ID).

Detailed examples of a method for reporting the reporting priority for FD basis information and/or SD basis information to the base station are as follows.

For example, for M FD basis information selected by the terminal, the terminal may report information on one specific FD basis information among M to the base station to indicate the strongest coefficient. In this case, the FD basis information indicated as the strongest coefficient described above may be configured/defined to have the highest priority among the M.

Based on the above-described example, when M is 2, a method of classifying CSI into two different UCI groups (with similar payloads) based on FD basis information may be considered. As an example, the report values corresponding to the FD basis information indicated as the strongest coefficient may be configured/defined as the first UCI group (e.g., UCI group 0), and the report values corresponding to the remaining FD basis information may be configured/defined as the second UCI group (e.g., UCI group 1).

As another example, the terminal may report bit information that may indicate priority (or UCI group identifier) to the base station for selected M FD basis information and/or P (or P/2 for polarization common) SD basis information (e.g., CSI-RS ports). In this case, the terminal may report the corresponding bit information to the base station for each of the selected M FD basis information or P SD basis information.

Based on the above-described example, for example, when M is 2, for each combination of {first FD basis information, second FD basis information}, priority bits corresponding to 1 bit may be defined. In this case, the report values corresponding to the FD basis information for which the priority bit is reported as 0 may be configured/defined as the first UCI group (e.g., UCI group 0), the report values corresponding to FD basis information for which the priority bit is reported as 1 may be configured/defined as the second UCI group (e.g., UCI group 1).

Based on the above-described example, for example, when M is 8, for each combination of {first SD basis information, second SD basis information, ..., $8^{th}$ SD basis information}, priority bits corresponding to 1 bit may be defined. In this case, the report values corresponding to the SD basis information for which the priority bit is reported as 0 may be configured/defined as the first UCI group (e.g., UCI group 0), the report values corresponding to SD basis information for which the priority bit is reported as 1 may be configured/defined as the second UCI group (e.g., UCI group 1).

For different UCI groups (e.g., a first UCI group, a second UCI group) configured based on the above-described Embodiment 1, the first UCI group may be defined to have a higher priority than the second UCI group. In this case, the base station and/or terminal may configure UCI on CSI based on the priority of the UCI group and may be configured/defined to omit reporting for lower priority UCI groups according to the uplink payload (e.g., UCI payload).

For existing Type II CB/PSCB (e.g., Type II CB/PSCB in Rel-15/16), priority is determined based on a certain rule (e.g., Equation 3), but, in the case of the method proposed in Example 1 described above, the terminal may directly determine the priority regarding omission of CSI. Therefore, in terms of precoding matrix configuration, the terminal may report more important CSI to the base station with high priority based on the calculated coefficient, and even when CSI is omitted (i.e., UCI is omitted), there is an advantage in being able to configure a more accurate precoding matrix.

Additionally, in relation to feType II CB/PSCB, a method of selecting up to 2 to 4 pieces of FD basis information and selecting up to 32 pieces of SD basis information may be considered. Since the number of bits required to support the method proposed in Example 1 described above is 1 bit for each FD/SD basis information, a maximum of 1 to 2 bits may be required for FD basis information, and a maximum of 5 bits may be required for SD basis information. Likewise, there is also an advantage that the overhead regarding the number of bits of priority reporting is not large.

Embodiment 2

This embodiment relates to a method of defining reporting priority for FD basis information and/or SD basis information with a fixed rule when the terminal reports CSI to the base station.

The terminal may configure uplink control information (UCI) for CSI based on the priority and omit transmission of low-priority UCI based on the priority and available UCI payload size.

For example, when reporting CSI to the base station, the terminal may define SD basis information corresponding to different polarizations to have alternate priorities.

In this regard, according to the priority rules (e.g., Equation 3) defined in relation to eType II CB/PSCB, sequential priority based on the index is defined for SD basis information. As an example, if FD basis information is assumed to be one, the report values corresponding to the SD basis information for i={ 0, 1,... , L-1} may have a higher priority than the report values corresponding to the SD basis information for i={L, L+1,... , 2L-1}. An example of priority in the case of L=4 with respect to eType II CB/PSCB may be as shown in Table 9.

[Table 9]

| i | 0 | 1 | 2 | 3 | 4 | 5 | 6 | 7 |
|---|---|---|---|---|---|---|---|---|
| UCI group | 0 | 0 | 0 | 0 | 1 | 1 | 1 | 1 |

In contrast, as another example, when defining priorities related to feType II CB/PSCB according to the method proposed in the present disclosure, if the FD basis information is assumed to be one, the report values corresponding to the SD basis information for i={0, L, 1, L+1,... , L/2-1, L/2+L-1} may have a higher priority than the report values corresponding to the SD basis information for i={L/2, L/2+L, L/2+1, L/2+L +1,... ,L-1, 2L-1}. An example of priority in the case of L=4 with respect to feType II CB/PSCB may be as shown in Table 10.

[Table 10]

| i | 0 | 1 | 2 | 3 | 4 | 5 | 6 | 7 |
|---|---|---|---|---|---|---|---|---|
| UCI group | 0 | 0 | 1 | 1 | 0 | 0 | 1 | 1 |

In conjunction with or in place of the above-described proposed method, a method of reporting the highest priority SD basis information may be applied. At this time, the highest priority SD basis information may be reported through a separate UCI. Alternatively, a rule may be defined to assume that the SD basis information indicated by the strongest coefficient is the highest priority SD basis information.

When the highest priority SD basis information is reported, the above-described proposed method (i.e., cross-priority definition) or the existing method (i.e., index-based sequential priority definition) may be applied using the corresponding SD basis information as a starting point. For example, when L=4, an example of priority according to the existing method may be shown in Table 11, and an example of priority according to the proposed method may be shown in Table 12. Here, it is assumed that the highest priority SD basis information is i=2.

[Table 11]

| i | 0 | 1 | 2 | 3 | 4 | 5 | 6 | 7 |
|---|---|---|---|---|---|---|---|---|
| UCI group | 1 | 1 | 0 | 0 | 0 | 0 | 1 | 1 |

[Table 12]

| i | 0 | 1 | 2 | 3 | 4 | 5 | 6 | 7 |
|---|---|---|---|---|---|---|---|---|
| UCI group | 1 | 1 | 0 | 0 | 1 | 1 | 0 | 0 |

The method proposed in Embodiment 2 has the feature of defining two SD basis information corresponding to each other with different polarizations to be included in the same UCI group. Therefore, in an environment where the difference in channel amplitude for different anodes is not large (e.g., an environment where analog beamforming is applied, an environment where there are few effective channel paths (e.g., LOS)), the report values corresponding to SD basis information with a large amplitude may be defined to have high priority.

Additionally, when reporting the highest priority SD basis information, in terms of precoding matrix configuration, the terminal may report more important CSI to the base station with high priority based on the calculated coefficient, and even when CSI is omitted (i.e., UCI omission), there is an advantage in being able to configure a more accurate precoding matrix.

Embodiment 3

This embodiment relates to a method of determining the priority of UCI for CSI in conjunction with or in place of the above-described embodiment 1 and/or embodiment 2. The detailed examples described below are divided for convenience of explanation, and some configuration (s) may be merged or replaced between the examples.

(Embodiment 3-1)

When the terminal reports CSI to the base station, the terminal may consider selecting and/or reporting a (maximum) number of CSI-RS ports that does not exceed the available UCI payload size. As an example, information on the number of CSI-RS ports selected and/or reported by the terminal may be included and reported in Part-1 CSI.

In this case, the terminal may configure uplink control information (UCI) for CSI based on the number of CSI-RS ports selected and/or reported, and may omit transmission of low-priority UCI based on the above-described priority and available UCI payload size.

For existing eType II CB/PSCB, the base station may configure the number of ports that the terminal may select among all CSI-RS ports (e.g., L=2, 4, or 6) to the terminal through a specific parameter (e.g., paramCombination-r16). In this case, the terminal may select 2L CSI-RS ports based on the configured value (i.e., L value).

Unlike the existing method, in the case of the method proposed in this embodiment, the terminal may directly determine/select the number of CSI-RS ports to report. When the terminal determines/selects the number of CSI-RS ports to directly report, since the UCI payload (i.e., UCI size) may vary depending on the number of corresponding CSI-RS ports, there is an advantage in being able to determine/select the appropriate number of CSI-RS ports within the available UCI payload.

(Embodiment 3-2)

When the terminal reports CSI to the base station, a method of defining multiple UCI groups in units of rank, layer, SD base information (e.g., CSI-RS port), and/or FD basis information may be considered. In this case, different priorities are assigned to each UCI group, and the terminal may construct uplink control information (UCI) for CSI based on the corresponding priorities.

For example, when two or more UCI groups are defined, with increased flexibility in applying UCI groups for CSI omissions, it has the advantage of being able to construct UCI of the optimal size for transmission based on the available UCI payload.

(Embodiment 3-3)

When the terminal reports CSI to the base station, all components (i.e., coefficients) of PMI may be set/defined to be included in UCI group 0 in a case that the terminal is set to wideband (WB) CSI reporting (e.g., WB PMI and/or WB CQI reporting, etc.) and/or Wf turn off. Here, UCI group 0 may mean the highest priority UCI group among one or more UCI groups.

In this case, only two-stage CSI omission (e.g., UCI omission based on two UCI groups) may be configured/defined to be performed. Table 13 shows examples of UCI groups for 2-step CSI omission.

[Table 13]

| Group number | Index |
|---|---|
| Group 0 | $i_{1,1}$, $i_{1,2}$, $i_{1,8,l}$ ($l = 1, ..., v$) |
| Group 1 | $i_{1,6,l}$ (if reported), the $v2LM_v$-$K^{NZ}$ elements of $i_{1,7,l}$, the $K^{NZ}$ elements of $i_{2,4,l}$ and the $K^{NZ}$ elements of $i_{2,5,l}$ ($l = 1, ..., v$) |

In conjunction with or in lieu of the proposed method in this embodiment, when set to WB CSI reporting and/or Wf turn off, CSI omission (i.e., UCI omission) may be performed in a specific layer order. The corresponding layer order may be prearranged/defined in advance, configured by the base station, or information additionally reported by the terminal.

For example, when RI=4, the priority of layer omission is the order of [4th layer, 3rd layer, 2nd layer, 1st layer] or the order of [1st layer, 2nd layer, 3rd layer, 4th layer] may be determined. That is, layers may be sequentially omitted until the capacity of the PUSCH resource configured by the base station is satisfied.

The above-described embodiments and methods described in each embodiment may be applied independently from each other, or may be applied in the form of a combination of multiple methods.

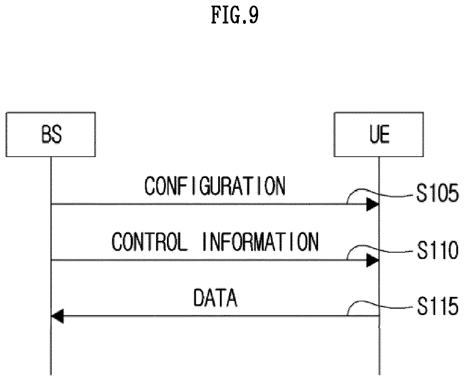

FIG. 9 is a diagram for explaining a signaling process according to an embodiment of the present disclosure.

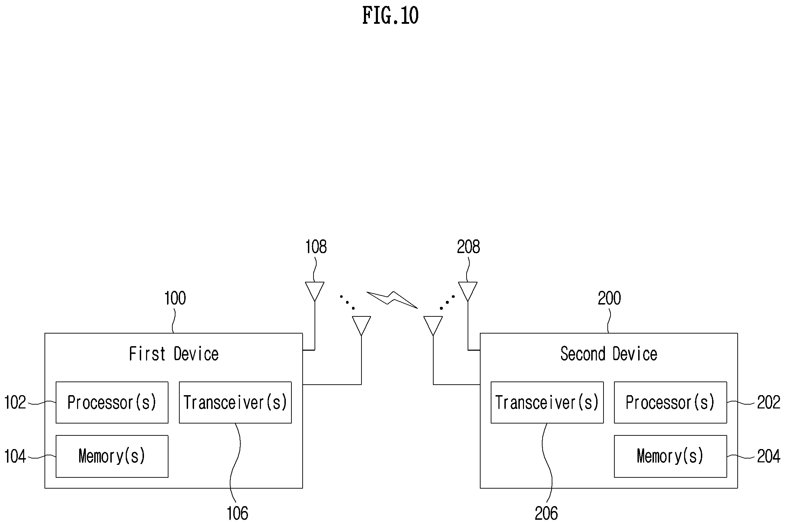

An example of the signaling operation of the base station and the terminal for the above-described embodiments may be as shown in FIG. 9. Here, the terminal/base station is just an example, and it may be substituted for various devices as described in FIG. 10. The base station may correspond to one base station including a plurality of TRPs or one cell including a plurality of TRPs. FIG. 9 is for convenience of description, and does not limit the scope of the present disclosure. Also, some of the steps described in FIG. 9 may be merged or omitted. In addition, in performing the procedures described below, the above-described transmission/reception operation of channel state information may be applied, but the scope of the present disclosure is not limited thereto, and various downlink reception or uplink transmission operations can be applied.

The UE may receive configuration information (Configuration) from the base station (S105). The Configuration may include system information (SI), scheduling information, CSI related configurations(e.g., CSI reporting related configuration, CSI resource related configuration, CSI-RS resource related configuration, etc.), the configuration of the base station (e.g., TRP configuration) information and the like. The configuration may be transmitted through higher layer (e.g., RRC or MAC CE) signaling. In addition, when the configuration is predefined or preconfigured, the corresponding step may be omitted.

For example, the operation of receiving the Configuration, by the UE (100/200 in FIG. 10), from the base station (200/100 in FIG. 10) in the above-described step S105 may be implemented by the apparatus of FIG. 10 to be described below. For example, referring to FIG. 10, one or more processors 102 may control one or more transceivers 106 and/or one or more memories 104, etc. to receive the Configuration, and one or more transceivers 106 may receive the configuration from the base station.

The UE may receive control information from the base station (S110). The control information may be received through a control channel (e.g., PDCCH). For example, the control information may be DCI/UCI. For example, the control information may include scheduling information for a downlink data channel (e.g., PDSCH) and/or an uplink channel (e.g., PUCCH/PUSCH) and the like. For example, based on the above-described embodiments, the control information may include control information related to CSI reporting triggering and/or

For example, the operation of receiving the control information, by the UE (100/200 in FIG. 10), from the base station (200/100 in FIG. 10) in the above-described step S110 may be implemented by the apparatus of FIG. 10 to be described below. For example, referring to FIG. 10, one or more processors 102 may control one or more transceivers 106 and/or one or more memories 104, etc. to receive the control information, and one or more transceivers 106 may receive the control information from the base station.

The UE may transmit data to the base station (S115). The data may be transmitted through an uplink channel. For example, the data may be scheduled based on the control information. In addition, the data may be transmitted based on the information configured/indicated in steps S105/S110. For example, based on the information configured/indicated in steps S105/S110, the UE may perform channel estimation/compensation and may transmit the data. For example, based on the above-described embodiments, the UE may measure the channel state, and transmit the measured channel state information (through PUCCH and/or PUSCH) to the base station.

For example, the operation of transmitting the data, by the UE (100/200 in FIG. 10), from the base station (200/100 in FIG. 10) in the above-described step S115 may be implemented by the apparatus of FIG. 10 to be described below. For example, referring to FIG. 10, one or more processors 102 may control one or more transceivers 106 and/or one or more memories 104, etc. to receive the data, and one or more transceivers 106 may receive the data from the base station.

Although not illustrated in FIG. 9, the UE may report to the base station priority related information which is related to the configuration of the channel state information.

As mentioned above, the above-described base station/UE signaling and operation (e.g., embodiment 1, embodiment 2, embodiment 3, FIGS. 7, 8, 9 etc.) may be implemented by the apparatus of FIG. 10 to be described below. For example, the base station may correspond to the first wireless device, the UE may correspond to the second wireless device, and vice versa may be considered in some cases.

For example, the base station/UE signaling and operation (e.g., embodiment 1, embodiment 2, embodiment 3, FIGS. 7, 8, 9, etc.) described above may be processed by one or more processors (e.g., 102, 202) of FIG. 10, and the above-described base station/UE signaling and operation (e.g., embodiment 1, embodiment 2, embodiment 3, FIGS. 7, 8, 9, etc.) may be stored in a memory (e.g., one or more memories 104 and 204 of FIG. 10) in the form of an instruction/program (e.g., instruction, executable code) for driving at least one processor of FIG. 10 (e.g., 102 and 202).

General Device to which the Present Disclosure may be applied

FIG. 10 illustrates a block diagram of a wireless communication device according to an embodiment of the present disclosure.

In reference to FIG. 10, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.  A method for performing channel state information (CSI) report by a user equipment (UE) in a wireless communication system, the method comprising:

    receiving, from a base station, configuration information on the channel state information report;
    receiving, from the base station, at least one channel state information-reference signal (CSI-RS) based on the configuration information; and
    transmitting, to the base station, CSI calculated based on the at least one CSI-RS and priority-related information for omission of the corresponding CSI,
    wherein the priority-related information is determined based on strongest coefficient information related to the corresponding CSI.

2.  The method of claim 1,
    wherein the priority-related information includes at least one of 1) spatial domain-related basis information or 2) frequency domain-related basis information corresponding to the strongest coefficient information.

3.  The method of claim 2,
    wherein the spatial domain-related basis information is information on a specific CSI-RS port among one or more CSI-RS ports based on port selection related to the CSI.

4.  The method of claim 2,
    wherein the frequency domain-related basis information is information on a specific frequency domain-related basis vector among one or more frequency domain-related basis vectors related to the CSI.

5.  The method of claim 1,

    wherein the CSI is based on one or more information groups for uplink control information, and
    wherein a priority between the one or more information groups is determined based on the priority-related information.

6.  The method of claim 5,
    wherein information group corresponding to the strongest coefficient information has the highest priority among the one or more information groups.

7.  The method of claim 5,
    wherein each of the one or more information groups includes at least one report value corresponding to a combination of spatial domain-related basis information and frequency domain-related basis information.

8.  The method of claim 7,
    wherein the at least one report value includes at least one of amplitude coefficient information, phase coefficient information, or non-zero coefficient indication information.

**9.** The method of claim 5,
wherein, based on the CSI being for wideband, a value for the precoding matrix indicator is included in a first information group among the one or more information groups.

**10.** The method of claim 1, further comprising:

transmitting, to the base station, information on the number of CSI-RS ports determined based on a uplink control information (UCI) payload size for the CSI,
wherein the CSI is determined based on the number of CSI-RS ports.

**11.** The method of claim 10,

wherein the CSI includes a first CSI part and a second CSI part, and
wherein information on the number of CSI-RS ports is included in the first CSI part.

**12.** A user equipment (UE) for performing channel state information (CSI) report in a wireless communication system, the UE comprising:

at least one transceiver; and
at least one processor coupled with the at least one transceiver,
wherein the at least one processor is configured to:

receive, from a base station, configuration information on the channel state information report;
receive, from the base station, at least one channel state information-reference signal (CSI-RS) based on the configuration information; and
transmit, to the base station, CSI calculated based on the at least one CSI-RS and priority-related information for omission of the corresponding CSI,
wherein the priority-related information is determined based on strongest coefficient information related to the corresponding CSI.

**13.** A method for receiving channel state information (CSI) report by a base station in a wireless communication system, the method comprising:

transmitting, to a user equipment (UE), configuration information on the channel state information report;
transmitting, to the UE, at least one channel state information-reference signal (CSI-RS) based on the configuration information; and
receiving, from the UE, CSI calculated based on the at least one CSI-RS and priority-related information for omission of the corresponding CSI,
wherein the priority-related information is determined based on strongest coefficient information related to the corresponding CSI.

**14.** A base station for receiving channel state information (CSI) report in a wireless communication system, the base station comprising:

at least one transceiver; and
at least one processor coupled with the at least one transceiver,
wherein the at least one processor is configured to:

transmit, to a user equipment (UE), configuration information on the channel state information report;
transmit, to the UE, at least one channel state information-reference signal (CSI-RS) based on the configuration information; and
receive, from the UE, CSI calculated based on the at least one CSI-RS and priority-related information for omission of the corresponding CSI,
wherein the priority-related information is determined based on strongest coefficient information related to the corresponding CSI.

**15.** A processing apparatus configured to control a user equipment (UE) to perform channel state information (CSI) report in a wireless communication system, the processing apparatus comprising:

at least one processor; and

at least one computer memory operably connected to the at least one processor and storing instructions that, based on being executed by the at least one processor, perform operations comprising:

receiving, from a base station, configuration information on the channel state information report;

receiving, from the base station, at least one channel state information-reference signal (CSI-RS) based on the configuration information; and

transmitting, to the base station, CSI calculated based on the at least one CSI-RS and priority-related information for omission of the corresponding CSI,

wherein the priority-related information is determined based on strongest coefficient information related to the corresponding CSI.

16. At least one non-transitory computer-readable medium storing at least one instruction,

wherein the at least one instruction executable by at least one processor controls a device performing channel state information (CSI) report in a wireless communication system to:

receive, from a base station, configuration information on the channel state information report;

receive, from the base station, at least one channel state information-reference signal (CSI-RS) based on the configuration information; and

transmit, to the base station, CSI calculated based on the at least one CSI-RS and priority-related information for omission of the corresponding CSI,

wherein the priority-related information is determined based on strongest coefficient information related to the corresponding CSI.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

Size depends on subcarrier spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

Resource grid

A carrier
(up to 3300 subcarriers,i,e.,275 RBs)

A BWP

1 RB=12 subcarrier

1 RE

1 subcarrier

1 Symbol

l=0 ·····

k=0

# FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601          S602          S603      S604          S605          S606          S607          S608

· DL/UL ACK/NACK
· UE CQI/PMI RI REPORT
  USING PUSCH AND PUCCH

# FIG.7

```
                    ( START )
                        |
                        v
    +-----------------------------------------+
    |   Receive configuration information     |------ S710
    |            on CSI report                |
    +-----------------------------------------+
                        |
                        v
    +-----------------------------------------+
    |              Receive CSI-RS             |------ S720
    +-----------------------------------------+
                        |
                        v
    +-----------------------------------------+
    |              Transmit CSI               |------ S730
    +-----------------------------------------+
                        |
                        v
                    ( END )
```

# FIG.8

```
              ┌──────────┐
              │  START   │
              └──────────┘
                   │
                   ▼
      ┌─────────────────────────────┐
      │  Transmit configuration     │────S810
      │  information on CSI report  │
      └─────────────────────────────┘
                   │
                   ▼
      ┌─────────────────────────────┐
      │     Transmit CSI-RS         │────S820
      └─────────────────────────────┘
                   │
                   ▼
      ┌─────────────────────────────┐
      │      Receive CSI            │────S830
      └─────────────────────────────┘
                   │
                   ▼
              ┌──────────┐
              │   END    │
              └──────────┘
```

FIG.9

EP 4 395 194 A1

# FIG.10

## INTERNATIONAL SEARCH REPORT

| International application No. |
| --- |
| **PCT/KR2022/009128** |

**A. CLASSIFICATION OF SUBJECT MATTER**

**H04B 7/06**(2006.01)i; **H04B 7/0417**(2017.01)i; **H04B 17/318**(2014.01)i; **H04B 17/345**(2014.01)i; **H04L 5/00**(2006.01)i

According to International Patent Classification (IPC) or to both national classification and IPC

**B. FIELDS SEARCHED**

Minimum documentation searched (classification system followed by classification symbols)

H04B 7/06(2006.01); H04B 7/0417(2017.01); H04L 1/00(2006.01); H04L 5/00(2006.01); H04W 4/00(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 상태 정보(channel state information), 생략(omission), 우선순위(priority), 가장 강한 계수(strongest coefficient)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2021-029701 A1 (LG ELECTRONICS INC.) 18 February 2021 (2021-02-18)<br>See paragraphs [0414], [0435]-[0447], [0473]-[0474], [0478], [0483]-[0488] and [0493]-[0496]. | 1-16 |
| Y | US 2020-0295812 A1 (SAMSUNG ELECTRONICS CO., LTD.) 17 September 2020 (2020-09-17)<br>See paragraphs [0203], [0291], [0303] and [0338]. | 1-16 |
| A | US 2021-0119684 A1 (NOKIA TECHNOLOGIES OY) 22 April 2021 (2021-04-22)<br>See paragraphs [0017]-[0027]; and figures 1-4. | 1-16 |
| A | WO 2021-035396 A1 (QUALCOMM INCORPORATED) 04 March 2021 (2021-03-04)<br>See paragraphs [0051]-[0092]; and figures 3-21. | 1-16 |
| A | WO 2021-019522 A1 (LENOVO (SINGAPORE) PTE. LTD.) 04 February 2021 (2021-02-04)<br>See page 9, line 11 – page 30, line 2; and figures 2-12. | 1-16 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 September 2022** | **30 September 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/009128**

| Patent document cited in search report | | | Publication date (day/month/year) | Patent family member(s) | | | Publication date (day/month/year) |
|---|---|---|---|---|---|---|---|
| WO | 2021-029701 | A1 | 18 February 2021 | CN | 114303325 | A | 08 April 2022 |
| | | | | KR | 10-2022-0046608 | A | 14 April 2022 |
| US | 2020-0295812 | A1 | 17 September 2020 | CN | 113228532 | A | 06 August 2021 |
| | | | | EP | 3868036 | A1 | 25 August 2021 |
| | | | | KR | 10-2021-0116708 | A | 27 September 2021 |
| | | | | US | 11128362 | B2 | 21 September 2021 |
| | | | | US | 2022-0006502 | A1 | 06 January 2022 |
| | | | | WO | 2020-184971 | A1 | 17 September 2020 |
| US | 2021-0119684 | A1 | 22 April 2021 | CN | 112671441 | A | 16 April 2021 |
| | | | | EP | 3809618 | A1 | 21 April 2021 |
| | | | | FI | 20195893 | A1 | 17 April 2021 |
| | | | | WO | 2021-074486 | A1 | 22 April 2021 |
| WO | 2021-035396 | A1 | 04 March 2021 | None | | | |
| WO | 2021-019522 | A1 | 04 February 2021 | CN | 114144982 | A | 04 March 2022 |
| | | | | EP | 4008069 | A1 | 08 June 2022 |
| | | | | WO | 2021-019521 | A1 | 04 February 2021 |

Form PCT/ISA/210 (patent family annex) (July 2019)